# EUROPEAN PATENT SPECIFICATION

(11) **EP 3 133 357 B1**
(45) Date of publication and mention of the grant of the patent: **05.09.2018**
(21) Application number: 14887710.3
(22) Date of filing: 25.07.2014
(51) Int. Cl.: F25B 30/02, F25B 27/00, F25B 13/00, F25B 5/04, F25B 40/06, F25B 43/00

(54) **HEAT PUMP SYSTEM HAVING STRUCTURE FOR RECOVERING WASTE HEAT BY MEANS OF SECONDARY EVAPORATOR**
WÄRMEPUMPENSYSTEM MIT STRUKTUR ZUR ABWÄRMEGEWINNUNG DURCH SEKUNDÄREN VERDAMPFER
SYSTÈME DE POMPE À CHALEUR DOTÉ D'UNE STRUCTURE DE RÉCUPÉRATION DE CHALEUR RÉSIDUELLE AU MOYEN D'UN ÉVAPORATEUR SECONDAIRE

(30) Priority: 18.04.2014 KR 20140046467
(43) Date of publication of application: 22.02.2017
(73) Proprietor: Boosung Engineering Corporation, Incheon 403-858 (KR)
(72) Inventor: KIM, Kyung Chun, Bucheon-si Gyeonggi-do 420-730 (KR)
(74) Representative: Zardi, Marco
(86) International application number: PCT/KR2014/006804
(87) International publication number: WO 2015/160040

(56) References cited:
- JP-A- H11 118 191
- JP-A- H11 118 191
- JP-A- 2007 240 066
- JP-A- 2007 240 066
- JP-A- 2010 196 948
- JP-A- 2010 196 948
- JP-A- 2014 040 995

## Description

### BACKGROUND OF THE INVENTION

### Field of the Invention

The present invention relates to a heat pump system having a waste heat recovery structure using a secondary evaporator, and more particularly to a heat pump system having a waste heat recovery structure using a secondary evaporator in which waste heat discharged to the outside in a heat pump cycle is recovered using a primary evaporator, a refrigerant transformed into a superheated vapor state by the recovered heat radiates heat via the secondary evaporator to provide a function of supplying initially introduced air in a preheated state to a condenser, and thus overload and operating energy of a compressor are saved in proportion to heat energy reused by the condenser.

### Description of the Related Art

In general, a heat pump is a cooling and heating apparatus which transfers a heat source of a low temperature to a high temperature or transfers a heat source of a high temperature to a low temperature using heat generated from of a refrigerant or condensation heat. Heat pumps are divided into an electrical type and an engine type. Recently, most heat pumps have a structure of executing both cooling and heating functions.

Such a heat pump includes a compressor compressing refrigerant to a high-temperature and high-pressure state and a refrigerant circulation unit connected to the compressor and inducing circulation of the refrigerant along a given path to perform an air conditioning function, and the refrigerant circulation unit includes a condenser, an evaporator, and an expansion valve.

Korean Registered Patent No. 10-1353185 (Registration Date: 2014. 01. 13) discloses a heat pump completely evaporating refrigerant, which has not been evaporated by an evaporator, and then transmitting the refrigerant to an accumulator to increase cooling or heating performance according to increase in the circulation quantity of the refrigerant. Here, an outdoor heat exchanger used in the heat pump performing cooling or heating includes an inner heat exchanger including an inner pipe in which first refrigerant is circulated and an outer pipe in which second refrigerant having temperature and pressure lower than the first refrigerant is circulated, an expansion valve installed in a pipe connected to the inner pipe, and an outdoor refrigerant flow pipe connected to the pipe in which the expansion valve is installed and operated as an evaporator if the first refrigerant is introduced from the pipe and operated as a condenser if high-temperature and high-pressure third refrigerant is introduced from a compressor.

As described above, in conventional compressors except for compressors for high pressure, the limits of the temperature and pressure of refrigerant input to the compressors are regulated. Due to these limits, in order to constitute a high-temperature and high-pressure heat pump having hot water supplying, heating, and drying functions, a refrigerant and a heat pump system for high pressure need to be provided, and manufacturing costs and maintenance expanses of such a system are high and thus development of a new system is continuously required.

Therefore, a conventional system executing both cooling and heating functions has many problems in supply of high-temperature heat. That is, the conventional system requires a compressor for high temperature and high pressure to raise temperature or driving of a general compressor for a long time and thus lowers efficiency, and generates overload in the compressor and thus causes malfunction of the compressor or freezing, such as frosting in a pipe between the compressor and a primary evaporator, thereby causing many problems in terms of cost and structural aspects, such as installation of a separate heater to supply high-temperature heat.

JP 2014 040995 A discloses a steam compression type heat pump according to the preamble of claim 1, comprising a liquid gas heat exchanger that indirectly heat-exchanges refrigerant from a condenser to an expansion valve and the refrigerant from an evaporator to a compressor. JP 2010 196948 A discloses a refrigerator including a compressor for discharging a refrigerant; a condenser connected to the compressor; a change-over valve changing over a flow passage or a flow rate of a refrigerant from the condenser and having first and second discharge ports; a refrigerating evaporator for refrigeration connected to the first discharge port of the change-over valve and cooling inside of a refrigerating chamber; and an evaporator for freezing connected to the second discharge port of the change-over valve and cooling a freezing chamber.

JPH 11-118191 A discloses an air controller where a first evaporator and a second evaporator are installed is partitioned into a dehumidification control room to make dehumidification control air and a cooling control room to make cooling control air, wherein the air conditioning room is provided with a blower so that it may send air to the dehumidification control room and the cooling control room, and the dehumidification control room is provided with a quantity-of-air control shutter to control the quantity of air flowing into there.

### SUMMARY OF THE INVENTION

Therefore, the present invention has been made in view of the above problems, and it is an object of the present invention to provide a heat pump system having a waste heat recovery structure using a secondary evaporator in which the second evaporator radiates heat by refrigerant in a superheated vapor state supplied from a primary evaporator in a heat pump cycle and thus serves to preheat initially introduced air and thereby, a condenser providing heated air in the heat pump cycle radiates heat using the preheated air and thus overload and operating energy of a compressor is saved in proportion to heat energy reused by the condenser.

In accordance with the present invention, the above and other objects can be accomplished by the provision of a heat pump system having a waste heat recovery structure using a secondary evaporator including a compressor compressing a refrigerant in a low-pressure gaseous state to a high-temperature and high-pressure gaseous state and supplying the compressed refrigerant in the high-temperature and high-pressure gaseous state to a condenser, the condenser connected to the compressor and liquefying the refrigerant in the high-temperature and
refrigerant to an expansion valve, when the refrigerant in the high-temperature and high-pressure gaseous state is supplied to the condenser, the expansion valve connected to the condenser, changing the liquefied refrigerant into a low-temperature and low-pressure saturated vapor state by decompressing the liquefied refrigerant to a pressure at which evaporation may occur by the wire drawing effect, and supplying the refrigerant in the saturated vapor state to a primary evaporator, when the liquefied refrigerant is supplied to the expansion valve, the primary evaporator connected to the expansion valve, evaporating the refrigerant in the low-temperature and low-pressure saturated vapor state and thus performing heat exchange between the refrigerant in the low-temperature and low-pressure saturated vapor state and the surrounding environment to absorb heat from the surrounding environment, when the refrigerant in the low-temperature and low-pressure saturated vapor state is supplied to the primary evaporator, changing the refrigerant into a superheated vapor state by recovering waste heat generated from the condenser, and supplying the refrigerant in the superheated vapor state to a secondary evaporator, and the secondary evaporator connected to the primary evaporator, changing the refrigerant in the superheated vapor state into the low-temperature and low-pressure saturated vapor state while performing heat radiation from the refrigerant in the superheated vapor state, and circulating the refrigerant in the low-temperature and low-pressure saturated vapor state to the compressor, when the refrigerant in the superheated vapor state is supplied to the secondary evaporator, wherein the condenser serves to provide heated air and the secondary evaporator is located in front of the condenser and serves to preheat initially introduced air and to lower the pressure and temperature of the refrigerant.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram of a heat pump system having a waste heat recovery structure using a secondary evaporator representing prior art, but not being part of the invention.
FIG. 2 is a view schematically illustrating a drying unit to which a heat pump system having a waste heat recovery structure using a secondary evaporator in accordance with the present invention is applied; and
FIG. 3 is a block diagram of a heat pump system having a waste heat recovery structure using a secondary evaporator in accordance with another embodiment of the present invention.

### DETAILED DESCRIPTION OF THE INVENTION

Now, a heat pump system having a waste heat recovery structure using a secondary evaporator in accordance with the present invention will be described in detail with reference to the annexed drawings.

In the following description of the present invention, a detailed description of known functions and configurations incorporated herein will be omitted when it may make the subject matter of the present invention rather unclear.

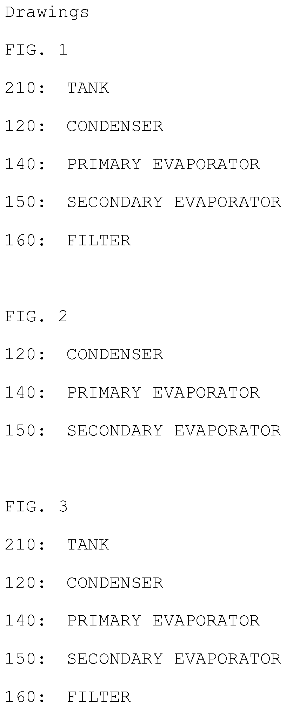

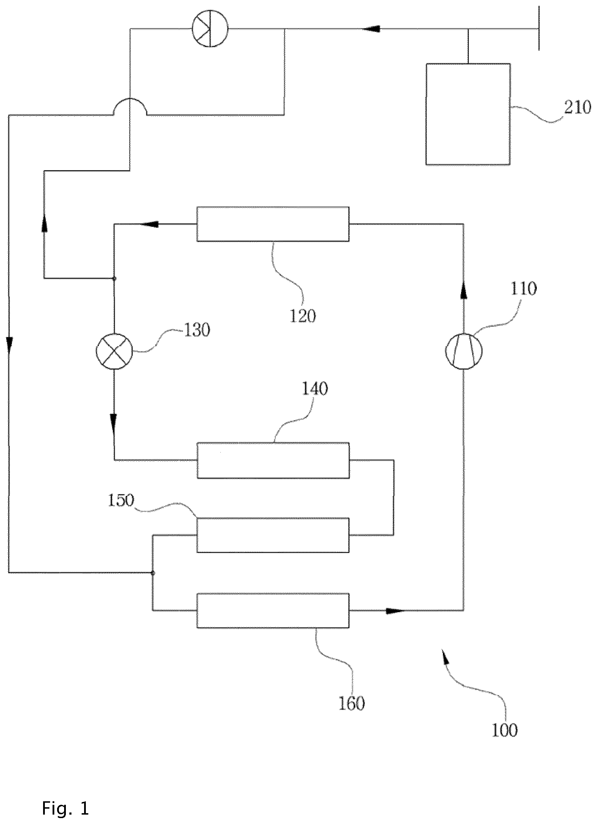

FIG. 1 is a block diagram of a heat pump system having a waste heat recovery structure using a secondary evaporator representing prior art, but not being part of the invention. A heat pump system having a waste heat recovery structure using a secondary evaporator in accordance with this embodiment includes a heat pump 100 including a compressor 110 compressing a refrigerant in a low-pressure gaseous state to a high-temperature and high-pressure gaseous state and supplying the compressed refrigerant in the high-temperature and high-pressure gaseous state to a condenser 120, the condenser 120 connected to the compressor 110 and liquefying the refrigerant in the high-temperature and high-pressure gaseous state by heat radiation and supplying the liquefied refrigerant to an expansion valve 130 when the refrigerant in the high-temperature and high-pressure gaseous state is supplied to the condenser 120, the expansion valve 130 connected to the condenser 120 and decompressing the liquefied refrigerant to a pressure at which evaporation may occur, i.e., a low-temperature and low-pressure saturated vapor state, by the wire drawing effect and supplying the refrigerant in the saturated vapor state to a primary evaporator 140 when the liquefied refrigerant is applied to the expansion valve 130, the primary evaporator 140 connected to the expansion valve 130, evaporating the refrigerant in the low-temperature and low-pressure saturated vapor state and thus performing heat exchange between the refrigerant in the low-temperature and low-pressure saturated vapor state and the surrounding environment to absorb heat from the surrounding environment when the refrigerant in the low-temperature and low-pressure saturated vapor state is supplied to the primary evaporator 140, changing the refrigerant into a superheated vapor state by recovering waste heat generated from the condenser 120, and supplying the refrigerant in the superheated vapor state to a secondary evaporator 150, and the secondary evaporator 150 connected to the primary evaporator 140, changing the refrigerant in the superheated vapor state into the low-temperature and low-pressure saturated vapor state while performing heat radiation from the refrigerant in the superheated vapor state, and circulating the refrigerant in the low-temperature and low-pressure saturated vapor state to the compressor 110 when the refrigerant in the superheated vapor state is supplied to the secondary evaporator 150. Here, the condenser 210 serves to provide air heated by the heat pump 100, and the secondary evaporator 150 serves to preheat initially introduced air.

Hereinafter, the respective elements will be described in more detail.

First, the compressor 110 serves to compress refrigerant in a low-pressure gaseous state to a high-temperature and high-pressure gaseous state and to supply the refrigerant in the high-temperature and high-pressure gaseous state to the condenser 120.

The compressor 110 sucks in a refrigerant, compresses the refrigerant to the high-temperature and high-pressure gaseous state, and discharges the refrigerant in the high-temperature and high-pressure gaseous state. The compressor 110 may include a scroll compressor.

Further, the condenser 120 is connected to the compressor 110, and liquefies the refrigerant in the high-temperature and high-pressure gaseous state by heat radiation and supplies the liquefied refrigerant to the expansion valve 130, which will be described later, when the refrigerant in the high-temperature and high-pressure gaseous state is supplied to the condenser 120.

The condenser 120 includes an input header, an output header, a plurality of tubes connecting the input and output headers so as to communicate the input and output headers with each other and thus forming a designated flow path, and a plurality of heat transfer fins stacked between the tubes.

An input side of the condenser 120 is connected to the compressor 110 by pipes so that the refrigerant in the high-temperature and high-pressure gaseous state is supplied to the input side, and an output side of the condenser 120 is connected to the expansion valve 130, which will be described later, so that the refrigerant liquefied by heat radiation is supplied to the output side.

Thereby, air introduced into the heat pump 100 by a separate air blower device flows toward the condenser 120 and passes through gaps between the heat transfer fins between the tubes and, through such a process, the refrigerant in the high-temperature and high-pressure gaseous state flowing in the condenser 120 exchanges heat with the blowing air and thus heats the air by heat radiation and is liquefied through condensation due to heat exchange with the blowing air, and then, the liquefied refrigerant is supplied to the expansion valve 130.

Therefore, the condenser 120 serves to provide air heated by the heat pump 100 due to heat radiation.

The expansion valve 130 is connected to the condenser 120 and decompresses the liquefied refrigerant to a pressure at which evaporation may occur, i.e., to a low-temperature and low-pressure saturated vapor state, by the wire drawing effect and supplies the refrigerant in the saturated vapor state to the primary evaporator 140, which will be described later, when the liquefied refrigerant is supplied to the expansion valve 130.

The expansion valve 130 is a device to easily generate heat absorption through evaporation of the refrigerant. The expansion valve 130 decompresses the refrigerant in the high-temperature and high-pressure state supplied from the condenser 120 to a pressure, at which evaporation may occur, by the wire drawing effect and lowers the temperature of the refrigerant to a proper temperature, at which the refrigerant may absorb sufficient heat, to change the refrigerant into the saturated vapor state.

Here, as the expansion valve 130, various expansion valve structures, such as an electronic expansion valve (EEV), a thermostatic expansion valve (TEV), and an automatic expansion valve (AXV), may be employed.

The primary evaporator 140 is connected to the expansion valve 130, evaporates the refrigerant in the low-temperature and low-pressure saturated vapor state and thus performs heat exchange between the refrigerant in the low-temperature and low-pressure saturated vapor state and the surrounding environment to absorb heat from the surrounding environment, when the refrigerant in the low-temperature and low-pressure saturated vapor state is supplied to the primary evaporator 140, changes the refrigerant into a superheated vapor state by recovering waste heat generated from the condenser 120, and supplies the refrigerant in the superheated vapor state to the secondary evaporator 150.

The primary evaporator 140 includes an input header, an output header, a plurality of tubes connecting the input and output headers so as to communicate the input and output headers with each other and thus forming a designated flow path, and a plurality of heat transfer fins stacked between the tubes.

Here, the primary evaporator 140 may be located at a position where waste heat of heated air generated from the condenser 120 is discharged to the outside, when use of the heated air has been completed. An input side of the primary evaporator 140 is connected to the expansion valve 130 so that the refrigerant in the low-temperature and low-pressure saturated vapor state is supplied to the input side, and an output side of the primary evaporator 140 is connected to the secondary evaporator 150, which will be described later.

Thereby, waste heat of the heated air generated from the condenser 120 is introduced into the primary evaporator 140 and passes through gaps between the heat transfer fins between the tubes during an air blowing process, through such a process, the refrigerant in the low-temperature and low-pressure saturated vapor state flowing along the flow path of the tubes within the primary evaporator 140 recovers the waste heat passing through the gaps between the heat transfer fins and is thus changed into a superheated vapor state, and the refrigerant in the superheated vapor state is supplied to the secondary evaporator 150.

The secondary evaporator 150 is connected to the primary evaporator 140, changes the refrigerant in the superheated vapor state into the low-temperature and low-pressure saturated vapor state while performing heat radiation from the refrigerant in the superheated vapor state, and circulates the refrigerant in the low-temperature and low-pressure saturated vapor state to the compressor 110, when the refrigerant in the superheated vapor state is supplied to the secondary evaporator 150.

The secondary evaporator 150 includes an input header, an output header, a plurality of tubes connecting the input and output headers so as to communicate the input and output headers with each other and thus forming a designated flow path, and a plurality of heat transfer fins stacked between the tubes.

Here, external air is initially introduced into the secondary evaporator 150, and the secondary evaporator 150 may be located at a position adjacent to the condenser 120. An input side of the secondary evaporator 150 is connected to the primary evaporator 140 so that the refrigerant in the superheated vapor state is supplied to the input side, and an output side of the secondary evaporator 150 is connected to the compressor 110.

Thereby, the initially introduced external air flows into the secondary evaporator 150 and passes through gaps between the heat transfer fins between the tubes during the air blowing process, through such a process, the refrigerant in the superheated vapor state flowing along the flow path of the tubes within the secondary evaporator 150 radiates heat due to heat exchange with the external air passing through the gaps between the heat transfer fins and thus heats the external air, is changed into the low-temperature and low-pressure saturated vapor state, and the refrigerant in the low-temperature and low-pressure saturated vapor state is supplied to the compressor 110.

Therefore, the secondary evaporator 150 serves to preheat the initially introduced air through heat radiation of the refrigerant in the superheated vapor state supplied from the primary evaporator 140, the heat preheated by the secondary evaporator 150 is introduced into the condenser 120 located adjacent to the secondary evaporator 150, and thus, the condenser 120 radiates heat using the preheated air and overload and operating energy of the compressor 110 may be saved in proportion to heat energy reused by the condenser 120.

The heat pump 100 further includes a filter 160 provided between the secondary evaporator 150 and the compressor 110 and serving to exhibit a filtering function to remove impurities from the refrigerant returning to the compressor 110.

Here, the filter 160 is manufactured so as to absorb foreign substances or moisture remaining within the respective elements of the heat pump 100 during the circulation process of the fluid refrigerant along pipes and then to transmit only the refrigerant, and prevents freezing of flow pipes or blocking of flow of the refrigerant due to the filtering function thereby.

The heat pump 100 further includes a refrigerant tank 210 supplementing/storing the refrigerant circulating within the heat pump 100 under the condition that input/output lines of the refrigerant tank 210 are respectively connected to the rear side of the condenser 120 and the rear side of the secondary evaporator 150 by pipes.

Here, the refrigerant tank 210 has a receipt space to receive the refrigerant formed therein and is connected to other elements of the heat pump 100 by pipes and thus, the refrigerant flows to the inside and outside of the refrigerant tank 210, and the refrigerant tank 210 serves to adjust a fixed amount of the refrigerant circulating in the heat pump 100.

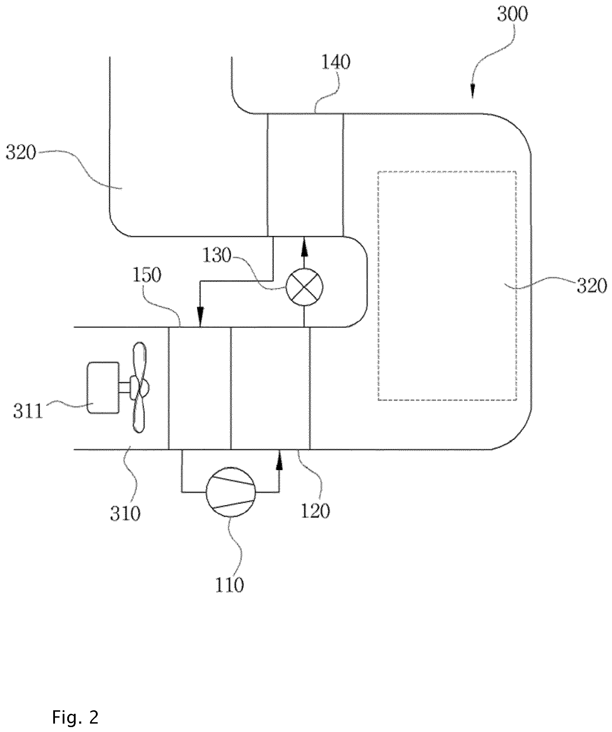

FIG. 2 is a view schematically illustrating a drying unit to which a heat pump system having a waste heat recovery structure using a secondary evaporator in accordance with the present invention is applied.

FIG. 2 schematically illustrates a drying unit 300 to which the above-described heat pump system is applied, and the heat pump system further includes the drying unit 300 allowing external air to be introduced thereinto, circulating the external air toward a drying part 320, and then discharging the external air, when the heat pump system is applied to the drying unit 300 and heated air is supplied to the drying unit 300.

The drying unit 300 is manufactured in a pipe type or a case type having a structure in which air is flowable, and induces heating of air by introducing/circulating/discharging external air into/within/from the heat pump system when the heat pump system is applied to the drying unit 300.

The drying unit 300 includes an input part 310, into which external air is initially introduced by a suction fan 311, having the secondary evaporator 150 and the condenser 120 sequentially installed at the inside thereof.

When the secondary evaporator 150 is installed at the side of the input part 310, into which air is introduced, the condenser 120 is installed at the rear of the secondary evaporator 150, and the compressor 110 provided between the secondary evaporator 150 and the condenser 120 is combined with the outside of the input part 310.

The suction fan 311 causing external air to be introduced into the input part 310 is installed in front of the secondary evaporator 150 within the input part 310.

The drying unit 300 further includes the drying part 320 communicated with the input part 310 so that heated air generated from the condenser 120 is introduced into the drying part 320 and providing a hot air drying space for a target object.

Here, the drying part 320 forms a space in which an object to be dried using heated air generated from the heat pump system is received.

Further, the drying unit 300 further includes an output part 330 communicated with the drying part 320 so that the heated air is introduced into the output part 330 and discharging the heated air to the outside via the primary evaporator 140 under the condition that the primary evaporator 140 is installed at the inside of the output part 330.

When the primary evaporator 140 is installed at the inside of the output part 330, heated air (waste heat air having completed drying) generated from the condenser 120 reaches the primary evaporator 140 and the primary evaporator 140 recovers the waste heat air and then discharges the waste heat air to the outside.

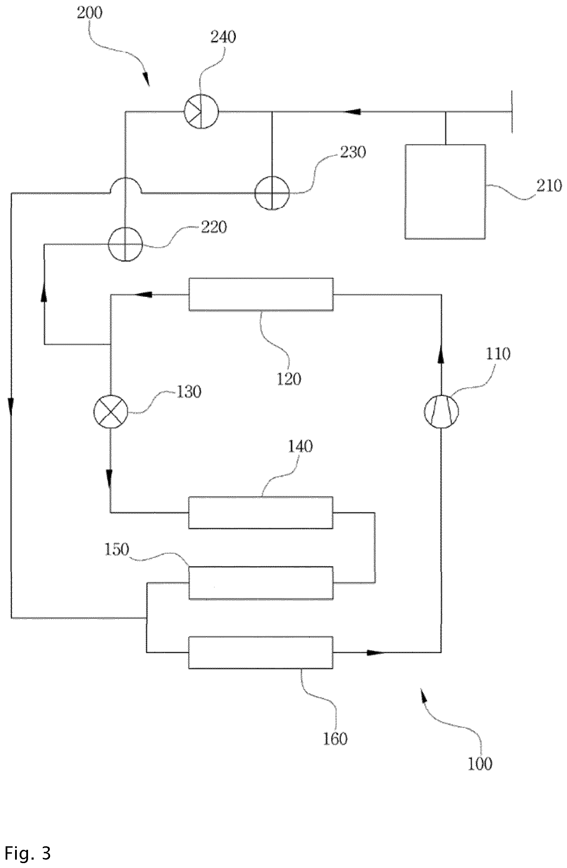

FIG. 3 is a block diagram of a heat pump system having a waste heat recovery structure using a secondary evaporator in accordance with another embodiment of the present invention.

FIG. 3 schematically illustrates a heat pump 100 in accordance with another embodiment, and the heat pump 100 further includes a refrigerant adjustment unit 200 measuring whether or not refrigerant circulated in a heat pump cycle exceeds an arbitrary pressure or is less than an arbitrary pressure using a high pressure sensor valve 220 and a low pressure sensor valve 230 and thus supplementing/discharging the refrigerant.

The refrigerant adjustment unit 200 includes the high pressure sensor valve 220 causing the refrigerant circulated in the heat pump 100 to be introduced into the refrigerant tank 210 and thus lowers the pressure of the refrigerant, if the refrigerant exceeds an arbitrarily determined high pressure, under the condition that the high pressure sensor valve 220 is connected to the refrigerant tank 210.

The high pressure sensor valve 220 is manufactured in a solenoid valve type having a sensor to measure pressure, formed therein, and the high pressure to measure pressure may be arbitrarily determined. One side of the high pressure sensor valve 220 is connected to the refrigerant tank 210 by pipes, and the other side of the high pressure sensor valve 220 is connected between the condenser 120 and the expansion valve 130 of the heat pump 100 by pipes.

The refrigerant adjustment unit 200 further includes the low pressure sensor valve 230 supplies refrigerant of a high pressure stored in the refrigerant tank 210 to the heat pump 100 and thus raises the pressure of the refrigerant, if the refrigerant is less than an arbitrarily determined low pressure, under the condition that the low pressure sensor valve 230 is connected to the refrigerant tank 210.

The low pressure sensor valve 230 is manufactured in a solenoid valve type having a sensor to measure pressure, formed therein, and the low pressure to measure pressure may be arbitrarily determined. One side of the low pressure sensor valve 230 is connected to the refrigerant tank 210 by pipes through a check valve 240, which will be described later, and the other side of the low pressure sensor valve 230 is connected between the secondary evaporator 150 and the compressor 110 of the heat pump 100 by pipes.

The refrigerant adjustment unit 200 further includes the check valve 240 preventing the refrigerant received in the refrigerant tank 210 from flowing back to the high pressure sensor valve 220, when the low pressure sensor valve 230 is opened under the condition that the check valve 240 is connected between the high pressure sensor valve 220 and the low pressure sensor valve.

As apparent from the above description, a heat pump system having a waste heat recovery structure using a secondary evaporator in accordance with one embodiment of the present invention raises the temperature of air sucked from the outside through a secondary evaporator in a heat pump cycle by heat radiation while the air passes through the secondary evaporator and thus reduces the load of a condenser to save operating energy of the condenser and to reduce production costs, and lowers the pressure and temperature of refrigerant introduced into a compressor through heat radiation by the secondary evaporator to prevent overload of the compressor and thus to improve durability of the compressor.

## Claims

1. A heat pump system having a waste heat recovery structure using a secondary evaporator (150) comprising:
a compressor (110) compressing a refrigerant in a low-pressure gaseous state to a high-temperature and high-pressure gaseous state and supplying the compressed refrigerant in the high-temperature and high-pressure gaseous state to a condenser (120);
the condenser (120) connected to the compressor (110) and liquefying the refrigerant in the high-temperature and high-pressure gaseous state by heat radiation and supplying the liquefied refrigerant to an expansion valve (130), when the refrigerant in the high-temperature and high-pressure gaseous state is supplied to the condenser (120);
the expansion valve (130) connected to the condenser (120), changing the liquefied refrigerant into a low-temperature and low-pressure saturated vapor state by decompressing the liquefied refrigerant to a pressure at which evaporation may occur by the wire drawing effect, and supplying the refrigerant in the saturated vapor state to a primary evaporator (140), when the liquefied refrigerant is supplied to the expansion valve (130);
the primary evaporator (140) connected to the expansion valve (130), evaporating the refrigerant in the low-temperature and low-pressure saturated vapor state and thus performing heat exchange between the refrigerant in the low-temperature and low-pressure saturated vapor state and the surrounding environment to absorb heat from the surrounding environment, when the refrigerant in the low-temperature and low-pressure saturated vapor state is supplied to the primary evaporator (140), changing the refrigerant into a superheated vapor state by recovering waste heat generated from the condenser (120), and supplying the refrigerant in the superheated vapor state to a secondary evaporator (150); and
the secondary evaporator (150) connected to the primary evaporator (140), changing the refrigerant in the superheated vapor state into the low-temperature and low-pressure saturated vapor state while performing heat radiation from the refrigerant in the superheated vapor state, and circulating the refrigerant in the low-temperature and low-pressure saturated vapor state to the compressor (110), when the refrigerant in the superheated vapor state is supplied to the secondary evaporator (150),
wherein the condenser (120) serves to provide heated air and the secondary evaporator (150) is located in front of the condenser (120) and serves to preheat initially introduced air and to lower the pressure and temperature of the refrigerant,
further comprising a drying unit (300) allowing external air to be introduced thereinto, circulating the external air toward a drying part (320), and then discharging the external air when the heat pump system is applied to the drying unit and heated air is supplied to the drying unit, and
**characterized in that** the drying unit (300) includes:
an input part (310) allowing the external air to be initially introduced thereinto by a suction fan (311) and having the secondary evaporator (150) and the condenser (120) sequentially installed at the inside thereof;
the drying part (320) communicated with the input part (310) so that heated air generated from the condenser (120) is introduced into the drying part (320) and providing a hot air drying space for a target object; and
an output part communicated with the drying part (320) so that the heated air is introduced into the output part and discharging the heated air to the outside via the primary evaporator (140) under the condition that the primary evaporator (140) is installed at the inside of the output part.

2. The heat pump system according to claim 1, further comprising a refrigerant tank supplementing/storing the refrigerant circulating in a heat pump cycle under the condition that input/output lines of the refrigerant tank are respectively connected to the rear side of the condenser (120) and the rear side of the secondary evaporator (150) by pipes.

## Patentansprüche

1. Wärmepumpensystem, das eine Abwärmerückgewinnungsstruktur aufweist, die einen sekundären Verdampfer (150) verwendet, umfassend:
einen Kompressor (110), der ein Kältemittel in einem gasförmigen Niederdruckzustand zu einem gasförmigen Hochtemperatur- und Hochdruckzustand komprimiert und das komprimierte Kältemittel in dem gasförmigen Hochtemperatur- und Hochdruckzustand einem Kondensator (120) zuführt;
den Kondensator (120), der mit dem Kompressor (110) verbunden ist und das Kältemittel in dem gasförmigen Hochtemperatur- und Hochdruckzustand durch Wärmeabstrahlung verflüssigt und das verflüssigte Kältemittel einem Expansionsventil (130) zuführt, wenn dem Kondensator (120) das Kältemittel in dem gasförmigen Hochtemperatur- und Hochdruckzustand zugeführt wird;
das Expansionsventil (130), das mit dem Kondensator (120) verbunden ist, das das verflüssigte Kältemittel zu einem gesättigten Niedertemperatur und Niederdruckdampfzustand ändert, indem es das verflüssigte Kältemittel auf einen Druck komprimiert, bei dem durch den Drahtzieheffekt eine Verdampfung stattfinden kann, und das das Kältemittel in dem gesättigten Dampfzustand einem primären Verdampfer (140) zuführt, wenn dem Expansionsventil (130) das verflüssigte Kältemittel zugeführt wird;
den primären Verdampfer (140), der mit dem Expansionsventil (130) verbunden ist, der das Kältemittel in dem gesättigten Niedertemperatur und Niederdruckdampfzustand verdampft und somit einen Wärmeaustausch zwischen dem Kältemittel in dem gesättigten Niedertemperatur und Niederdruckdampfzustand und der Umgebung durchführt, um Wärme von der Umgebung zu absorbieren, wenn dem primären Verdampfer (140) das Kältemittel in dem gesättigten Niedertemperatur und Niederdruckdampfzustand zugeführt wird, der das Kältemittel zu einem überhitzten Dampfzustand ändert, indem er von dem Kondensator (120) erzeugte Abwärme rückgewinnt, und der das Kältemittel in dem überhitzten Dampfzustand einem sekundären Verdampfer (150) zuführt; und
den sekundären Verdampfer (150), der mit dem primären Verdampfer (140) verbunden ist, der das Kältemittel in dem überhitzten Dampfzustand in den gesättigten Niedertemperatur und Niederdruckdampfzustand ändert, während er eine Wärmeabstrahlung von dem Kältemittel in dem überhitzten Dampfzustand durchführt, und der das Kältemittel in dem gesättigten Niedertemperatur und Niederdruckdampfzustand zu dem Kompressor (110) zirkuliert, wenn dem sekundären Verdampfer (150) das Kältemittel in dem überhitzten Dampfzustand zugeführt wird,
wobei der Kondensator (120) dazu dient, erwärmte Luft bereitzustellen, und der sekundäre Verdampfer (150) vor dem Kondensator (120) angeordnet ist und dazu dient, anfänglich eingeführte Luft vorzuwärmen und den Druck und die Temperatur des Kältemittels zu senken,
ferner umfassend eine Trocknungseinheit (300), die erlaubt, dass Außenluft in diese eingeführt wird, die die Außenluft in Richtung eines Trocknungsteils (320) zirkuliert, und die dann die Außenluft abführt, wenn das Wärmepumpensystem an die Trocknungseinheit angelegt wird und der Trocknungseinheit erwärmte Luft zugeführt wird, und
**dadurch gekennzeichnet, dass** die Trocknungseinheit (300) umfasst:
ein Eingangsteil (310), das erlaubt, dass die Außenluft anfänglich in dieses durch ein Sauggebläse (311) eingeführt wird, und das den sekundären Verdampfer (150) und den Kondensator (120) aufweist, die an seiner Innenseite aufeinanderfolgend installiert sind;
das Trocknungsteil (320), das mit dem Eingangsteil (310) in Verbindung steht, so dass von dem Kondensator (120) erzeugte erwärmte Luft in das Trocknungsteil (320) eingeführt wird, und das einen Heißlufttrocknungsraum für ein Zielobjekt bereitstellt; und
ein Ausgangsteil, das mit dem Trocknungsteil (320) in Verbindung steht, so dass die erwärmte Luft in das Ausgangsteil eingeführt wird, und das unter der Bedingung, dass der primäre Verdampfer (140) an der Innenseite des Ausgangsteils installiert ist, die erwärmte Luft über den primären Verdampfer (140) zur Außenseite hin abführt.

2. Wärmepumpensystem nach Anspruch 1, ferner umfassend einen Kältemitteltank, der unter der Bedingung, dass Eingangs-/Ausgangsleitungen des Kältemitteltanks mit der Rückseite des Kondensators (120) bzw. der Rückseite des sekundären Verdampfers (150) durch Rohre verbunden sind, das in einem Wärmepumpenzyklus zirkulierende Kältemittel ergänzt/speichert.

## Revendications

1. Système de pompe à chaleur présentant une structure de récupération de la chaleur résiduelle utilisant un évaporateur secondaire (150) comprenant :
- un compresseur (110) comprimant un réfrigérant dans un état gazeux sous basse pression en un état gazeux sous haute pression et haute température et fournissant le réfrigérant comprimé à l'état gazeux à haute température et haute pression à un condenseur (120),
- le condenseur (120) étant connecté au compresseur (110) et liquéfiant le réfrigérant dans un état gazeux à haute température et haute pression par radiation de chaleur et fournissant le réfrigérant liquéfié à un détendeur (130) quand le réfrigérant dans un état gazeux à haute température et haute pression est fourni au condenseur (120),
- le détendeur (130) étant connecté au condenseur (120) changeant le réfrigérant liquide en un état de vapeur saturée à basse température et basse pression en décompressant le réfrigérant liquéfié à une pression à laquelle l'évaporation peut avoir lieu par l'effet du laminage et fournissant le réfrigérant à l'état de vapeur saturée à un évaporateur primaire (140), quand le réfrigérant liquéfié est fourni au détendeur (130),
- l'évaporateur primaire (140) étant connecté au détendeur (130), évaporant le réfrigérant à l'état de vapeur saturée à basse température et basse pression et réalisant ainsi un échange thermique entre le réfrigérant à l'état de vapeur saturée à basse température et basse pression et l'environnement alentour pour absorber la chaleur de l'environnement alentour, quand le réfrigérant à l'état de vapeur saturée à basse température et basse pression est fourni à l'évaporateur primaire (140), faisant passer le réfrigérant à l'état de vapeur surchauffée en récupérant la chaleur résiduelle générée par le condenseur (120) et fournissant le réfrigérant à l'état de vapeur surchauffée à un évaporateur secondaire (150), et
- l'évaporateur secondaire (150) étant connecté à l'évaporateur primaire (140), faisant passer le réfrigérant dans un état de vapeur surchauffée à l'état de vapeur saturée à basse température et basse pression tout en réalisant la radiation de chaleur du réfrigérant à l'état de vapeur surchauffée et fournissant le réfrigérant à l'état de vapeur saturée à basse température et basse pression au compresseur (110), quand le réfrigérant à l'état de vapeur surchauffée est fourni à l'évaporateur secondaire (150),
- où le condenseur (120) sert à fournir de l'air chauffé et le deuxième évaporateur (150) est situé devant le condenseur (120) et sert à préchauffer l'air introduit initialement et à abaisser la pression et la température du réfrigérant,
- comprenant en outre une unité de séchage (300) permettant à l'air extérieur d'être introduit à l'intérieur, faisant circuler l'air extérieur vers une pièce de séchage (320) et déchargeant ensuite l'air extérieur quand le système de pompe à chaleur est appliqué à l'unité de séchage et l'air chauffé est fourni à l'unité de séchage, et
- **caractérisé en ce que** l'unité de séchage (300) inclut :
- une pièce d'entrée (310) permettant à l'air extérieur d'être introduit initialement à l'intérieur par un ventilateur à succion (311) et dans laquelle sont installés séquentiellement l'évaporateur secondaire (150) et le condenseur (120),
- la pièce de séchage (320) en communication avec la pièce d'entrée (310) si bien que l'air chauffé généré par le condenseur (120) est introduit dans la pièce de séchage (320) et fournissant un espace de séchage à air chaud pour un objet cible, et
- une pièce de sortie en communication avec la pièce de séchage (320) si bien que l'air chauffé est introduit dans la pièce de sortie et déchargeant l'air chauffé à l'extérieur via l'évaporateur primaire (140) à condition que l'évaporateur primaire (140) soit installé à l'intérieur de la pièce de sortie.

2. Système de pompe à chaleur selon la revendication 1, comprenant en outre un réservoir de réfrigérant supplémentant/stockant le réfrigérant circulant dans un cycle de pompe à chaleur à condition que les voies d'entrée/sortie du réservoir de réfrigérant soient respectivement connectées à l'arrière du condenseur (120) et à l'arrière de l'évaporateur secondaire (150) par des tuyaux.
